# EUROPÄISCHE PATENTSCHRIFT

(11) **EP 2 415 698 B1**
(45) Veröffentlichungstag und Bekanntmachung des Hinweises auf die Patenterteilung: **20.03.2013**
(21) Anmeldenummer: 10172058.9
(22) Anmeldetag: 05.08.2010
(51) Int. Cl.: B65G 53/52, B05B 7/14, C23C 4/12, C23C 24/00, C23C 24/04, B05B 7/20

(54) **Zuführeinrichtung sowie Verfahren zur Zuführung eines pulverförmigen Materials von einem Vorratsbehälter zu einer Pulver verarbeitenden Einrichtung**
Feed device and method for feeding a powdery material from a reservoir to a device which processes powder
Dispositif d'alimentation et procédé destiné à l'alimentation d'un matériau sous forme de poudre d'un réservoir vers un dispositif de transformation de poudre

(43) Veröffentlichungstag der Anmeldung: 08.02.2012
(73) Patentinhaber: Sulzer Metco AG, 5610 Wohlen (CH)
(72) Erfinder: Rüedi, Urs, 5610, Wohlen (CH)
(74) Vertreter: Kluthe, Stefan

(56) Entgegenhaltungen:
- EP-A1- 0 131 805
- EP-A1- 0 366 932
- DE-A1- 2 600 546

## Beschreibung

Die Erfindung betrifft eine Zuführeinrichtung sowie ein Verfahren zur Zuführung eines pulverförmigen Materials, insbesondere eines thermischen Spritzpulvers von einem Vorratsbehälter zu einer Pulver verarbeitenden Einrichtung, im Speziellen thermische Spritzeinrichtung gemäss dem Oberbegriff des unabhängigen Anspruchs der jeweiligen Kategorie.

Pulver verarbeitende Einrichtungen der verschiedensten Art, die im Betriebszustand mit pulverförmigen, Materialien, wie Spritzpulvern, Mineralien, wie beispielsweise Sand, Granulaten, usw., die aus den verschiedensten Werkstoffen bestehen können, versorgt werden müssen, umfassen in der Regel ein Pulverversorgungssystem, das im wesentlichen aus einem Pulverfördersystem besteht, mit welchem aus einem Vorratsbehälter, in dem eine bestimmte Menge des benötigten Pulvers als Vorrat gespeichert werden kann, das Pulver über einen Pulverschlauch der Pulver verarbeitenden Einrichtung zugeführt werden kann.

Ein entsprechendes System bzw. Verfahren zur Zuführung eines pulverförmigen Materials ist beispielweise in der DE 26 00 546 A1 oder der EP 0 366 932 A1 bereits beschrieben, die einen Pulverschlauch mit einer Vibrationseinrichtung offenbaren.

In der industriellen Praxis können die zuvor erwähnten Pulver verarbeitenden Einrichtungen zum Beispiel thermische Spritzvorrichtungen, wie Plasmapistolen, Kaltgas-Spritzsysteme, oder die verschiedenen wohlbekannten Flammspritz- und Lichtbogenspritzsysteme (bei welchem zum Beispiel neben einem Spritzdraht auch Pulver verarbeitet wird) oder andere Pulver verarbeitende Spritzsysteme sein, mit denen beispielsweise Oberflächen von Werkstücken veredelt werden. Ein Beispiel für andere Pulver verarbeitende Einrichtungen sind Vorrichtungen zur Oberflächenbehandlungen von Werkstücken, zum Beispiel zur abrasiven, aufrauenden oder polierenden Behandlung einer Oberfläche eines Werkstücks mittels eines Strahlguts, beispielsweise mittels Mineralien wie Sand, feinem Staub, oder einem metallischen, keramischem oder synthetischen Strahlgut.

Häufig treten dabei Probleme bei der Förderung des pulverförmigen Materials durch den Pulverschlauch auf. Wesentliche Gründe dafür sind, dass die pulverförmigen Materialen, zum Beispiel thermische Spritzpulver tendenziell zum Verklumpen neigen und sich an der Innenseite des Pulverschlauches anlagern können. In der Praxis sind die Pulverschläuche sehr oft flexible Schläuche, damit die Pulver verarbeitende Einrichtung, die zum Beispiel eine thermische Spritzpistole ist, flexibel durch den Raum geführt werden kann, um beispielsweise eine Oberfläche eines Substrats mit einer thermischen Spritzschicht zu versehen. Daher ändert der Pulverschlauch ständig seine Form während eines Bearbeitungsvorgangs, wie beim thermischen Spritzen oder beim Sandstrahlen und es können sich insbesondere Biegungen in Form von Senken ausbilden, die dann einen durchhängenden Bereich am Pulverschlauch bilden, in denen das pulverförmige Material besonders leicht verklumpt und sich an den Wänden des Pulverschlauchs festsetzt. Im schlimmsten Fall kann dadurch der Pulverschlauch so stark verstopfen, dass der Pulverfluss im Pulverschlauch vollkommen zu Erliegen kommt und der entsprechende Bearbeitungsvorgang abgebrochen werden muss.

Aber selbst wenn der Pulverfluss durch den Pulverschlauch nicht vollständig zum erliegen kommt, so wird der Pulverfluss durch den Pulverschlauch zumindest ungleichmässig und kann zum Beispiel in nicht vorhersehbarere Weise fluktuieren, so dass die Qualität bzw. die Güte des Bearbeitungsprozesses merklich leidet.

Das ist besonders störend beim thermischen Spritzen. Wenn hier kein gleichmässiger Pulverfluss zur thermischen Spritzpistole gewährleistet ist, können die Eigenschaften und damit die Qualität der thermischen Spritzschicht signifikant leiden, so dass die gespritzte Schicht und damit im schlimmsten Fall das gesamte Werkstück unbrauchbar wird und ausgesondert werden muss.

Eine teilweise Lösung dieses Problems wird in der EP 0 131 805 angeboten, die eine thermische Spritzvorrichtung offenbart, die über einen Pulverschlauch einen Pulverförderer mit einer thermischen Spritzpistole verbindet, so dass thermisches Spritzpulver während eines thermischen Beschichtungsprozesses aus einem Pulvervorrat der Spritzpistole zuführbar ist.

Zum besseren Verständnis der vorliegenden Erfindung, wird im Folgenden der Stand der Technik gemäss EP 0 131 805 anhand der Fig. 1 kurz diskutiert. Dabei werden im Rahmen der vorliegenden Anmeldung Bezugszeichen zu Merkmalen von aus dem Stand der Technik bekannter Vorrichtungen in der Zeichnung mit einem Hochkomma gekennzeichnet, während die Bezugszeichen zu Merkmalen erfindungsgemässer Vorrichtungen kein Hochkomma tragen.

Um ein Verklumpen des Spritzpulvers im Pulverschlauch zumindest teilweise zu vermeiden, ist bei der Erfindung der EP 0 131 805 ein mechanischer Vibrator 7' vorgesehen, welcher sich ortsfest am Pulverförderer 3' befindet. Der Vibrator 7' stimuliert einen spiralförmigen Mantel 6', der den Pulverschlauch 5' umgibt. Der Pulverschlauch 5' mit spiralförmigem Mantel 6' ist über den zweiten Anschluss A2' mit einer nicht näher dargestellten thermischen Spritzpistole verbunden und über den ersten Anschluss A1' über den Pulverförderer 3' mit dem Vibrator 7' gekoppelt. Zwischen dem ersten Anschluss A1' und dem zweiten Anschluss A2' hängt der Pulverschlauch 5' durch und hat daher einen tiefsten Punkt P'. In der Umgebung des tiefsten Punkt P' haftet das durch den Pulverschlauch 5' zu transportierende Spritzpulver besonders gut an der Innenwand des Pulverschlauchs 5' und neigt in der Umgebung des tiefsten Punkts P' besonders stark zum Verklumpen.

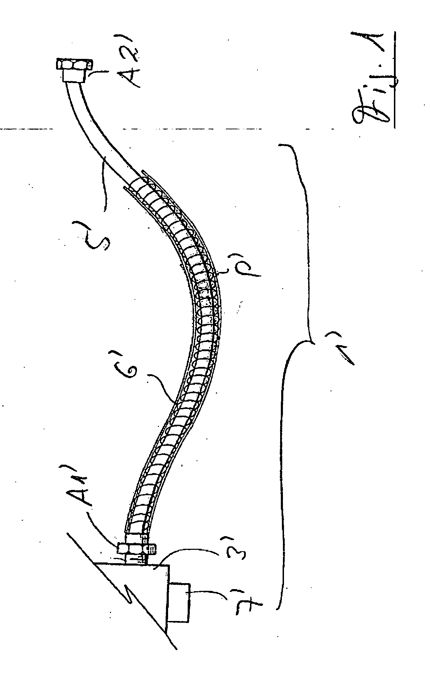

Die Ausbreitung der der durch den Vibrator 7' stimulierten Vibrationsbewegung entlang des Pulverschlauchs 5' ist bei der Vorrichtung der Fig. 1 gemäss EP 0 131 805 jedoch begrenzt und an einer vorgegebenen Stelle im Pulverschlauch 5' umso stärker gedämpft, je weiter man von dem am Pulverförderer 3' angebrachten mechanischen Vibrator 7' entfernt ist. Dabei hat die Dämpfung mit zunehmendem Abstand vom Vibrator 7' bekanntermassen nicht nur eine Abnahme der Amplitude der Vibrationsbewegung im Pulverschlauch 5', sondern auch in Abhängigkeit vom Abstand zum Vibrator 7' eine Verschmierung der Frequenz der Schwingung zur Folge. Ganz davon abgesehen, dass sich bei der Vorrichtung gemäss Fig. 1 konstruktionsbedingt Amplitude und Frequenz der Vibrationen im Pulverschlauch 5' nur bedingt einstellen lassen.

Die Folge ist, dass je nach dem in welcher Entfernung vom Vibrator 7' sich eine Verklumpung bildet oder im Pulverschlauch 5' zu bilden droht, diese mehr oder weniger gut durch die Vibrationen aufgelöst wird. Wenn sich zum Beispiel eine Verklumpung relativ nahe am Vibrator 7' bildet oder zu bilden droht, weil der Pulverschlauch 5' dort zum Beispiel durchhängt und dort seinen tiefsten Punkt P' ausbildet, wird diese Verklumpung durch die Vibrationsbewegung relativ zuverlässig und vollständig aufgelöst bzw. verhindert. Wird der Pulverschlauch 5' im Laufe des Bearbeitungsprozesses sodann bewegt, so dass der Pulverschlauch 5' dann, wie zum Beispiel in Fig. 1 gezeigt, an einer anderen Stelle, relativ weit entfernt vom Vibrator 7' am Punkt P' durchhängt, wird eine drohende oder bestehende Verklumpung schlechter verhindert bzw. wieder aufgelöst, weil weiter vom Vibrator 7' entfernt die Vibrationen jetzt schwächer sind. Dadurch ist aber wiederum kein gleichmässiger Pulverfluss über den gesamten Bearbeitungsvorgang gewährleistet und die oben bereits beschriebenen Probleme mit der Güte des Prozesses bzw. der mangelnden Qualität der damit hergestellten Produkte treten prinzipiell genauso auf, so dass die Vorrichtung gemäss EP 0 131 805 insbesondere für hoch empfindliche Prozesse und hochwertige Produkte keine umfassende Lösung bietet.

Die Aufgabe der Erfindung ist es daher, eine Zuführeinrichtung sowie ein Verfahren zur Zuführung eines pulverförmigen Materials von einem Vorratsbehälter zu einer Pulver verarbeitenden Einrichtung, insbesondere zur Zuführung eines Spritzpulvers zu einer thermischen Spritzvorrichtung bereitzustellen, die die Nachteile des Stands der Technik vermeidet. Insbesondere soll durch die Erfindung ein gleichmässiger Pulverfluss durch einen flexiblen Schlauch der Zuführeinrichtung über den gesamten Bearbeitungsvorgang gewährleistet werden, so dass eine hohe Güte des Prozesses bzw. eine ausreichend hohe Qualität der hergestellten bzw. bearbeiteten Produkte stets gewährleistet ist, so dass insbesondere für hoch empfindliche Prozesse und hochwertige Produkte eine umfassende Lösung bereit steht. Ausserdem sollen durch die vorliegende Erfindung Unterbrüche im Betrieb vermieden werden, die durch teilweises oder vollständiges Verstopfen des Pulverschlauchs bei den aus dem Stand der Technik bekannten Vorrichtungen immer wieder vorkommen, so dass letztlich die Wirtschaftlichkeit insgesamt beim Betrieb erhöht wird.

Die diese Aufgaben lösenden Gegenstände der Erfindung sind durch die Merkmale des unabhängigen Anspruchs gekennzeichnet.

Die abhängigen Ansprüche beziehen sich auf besonders vorteilhafte Ausführungsformen der Erfindung.

Die Erfindung betrifft somit eine Zuführeinrichtung zur Zuführung eines pulverförmigen Materials von einem Vorratsbehälter zu einer Pulver verarbeitenden Einrichtung, wobei die Zuführeinrichtung einen flexiblen Pulverschlauch von vorgebbarer Länge, in einem Speziellen Ausführungsbeispiel von einer fixen Länge umfasst, und am Pulverschlauch eine Vibrationseinrichtung in einem Vibrationsabschnitt ausgebildet ist.

Dabei ist die Vibrationseinrichtung eine homogene bzw. eine quasi homogene Vibrationseinrichtung, so dass dem Pulverschlauch im Betriebszustand eine homogene mechanische Vibration über eine vorgebbare Vibrationslänge einprägbar ist. Erfindungsgemäss umfasst die Vibrationseinrichtung einen elektrisch leitenden Draht, wobei die Vibrationseinrichtung mit einer eine Vibrationsenergie liefernden Erregerquelle verbunden ist, mit welcher die Vibrationseinrichtung zu der homogenen mechanischen Vibration über die vorgegebene Vibrationslänge anregbar ist, und die Erregerquelle eine elektrische Wechselspannungsquelle oder eine elektrische Wechselstromquelle ist, die die Vibrationsenergie am elektrisch leitenden Draht in Form einer elektrischen Wechselspannung oder eines elektrischen Wechselstroms bereitstellt.

Dabei soll im Rahmen dieser Anmeldung unter einer pulverförmigen Substanz jedwede Substanz verstanden werden, die einen kornartigen Charakter hat, wobei die einzelnen kornartigen Teilchen der pulverförmigen Substanz zum Beispiel Grössen von wenigen Mikrometern oder darunter bis hin zu einigen Millimetern oder sogar noch grösser sein können. Die pulverförmigen Substanzen können insbesondere Spritzpulver zum thermischen Spritzen sein und die Pulver verarbeitende Einrichtung ist dann eine thermische Spritzeinrichtung, zum Beispiel eine thermische Spritzpistole, die über eine erfindungsgemässe Zuführeinrichtung, die ein Pulverschlauch ist, aus einem Spritzpulvervorrat mit Spritzpulver versorgt wird.

In einem anderen Beispiel ist die pulverförmige Substanz ein Sand zum Sandstrahlen einer Oberfläche eines Substrats und die Pulver verarbeitende Einrichtung ist dann eine Sandstrahleinrichtung, die über eine erfindungsgemässe Zuführeinrichtung, die ein Pulverschlauch zum Förden von Sand ist, aus einem Sandvorrat mit Sand versorgt wird.

Dabei ist die Erfindung nicht auf die beiden vorgenannten Beispiele Sandstrahlen und thermisches Spritzen beschränkt sondern kann überall vorteilhaft eingesetzt werden, wo ein pulverförmiges Material, das zum Verklumpen oder zur Anhaftung an einer Wand eines Pulverschlauchs neigt, durch den Pulverschlauch gefördert werden muss.

Wesentlich für die Erfindung ist dabei, dass die Vibrationseinrichtung eine homogene Vibrationseinrichtung ist, so dass dem Pulverschlauch im Betriebszustand eine homogene mechanische Vibration über eine vorgebbare Vibrationslänge, besonders bevorzugt über seine gesamte Länge einprägbar ist. Dabei ist unter einer homogenen Vibrationseinrichtung eine Vibrationseinrichtung zu verstehen, die im Vibrationsabschnitt über die gesamte Vibrationslänge dem Pulverschlauch in Bezug auf eine massgebliche charakteristische Grösse eine gleichmässige Vibration einprägt. Das kann zum Beispiel bedeuten, dass über die gesamte Vibrationslänge eine Vibration gleicher Stärke, zum Beispiel eine Vibration gleicher Amplitude eingeprägt wird. In einem anderen Beispiel ist es möglich, dass über die gesamte Vibrationslänge eine Vibration gleicher Frequenz bzw. eine Vibration gleicher Frequenzverteilung eingeprägt wird.

Besonders bevorzugt wird dem Pulverschlauch im Vibrationsabschnitt über die gesamte Vibrationslange eine Vibration von im Wesentlichen gleicher Stärke und im Wesentlichen gleicher Frequenz bzw. gleicher Frequenzverteilung eingeprägt. Beispielweise, aber nicht zwingend notwendig, kann dem Pulverschlauch im Vibrationsabschnitt über die gesamte Vibrationslange eine sinusartige Vibration von im Wesentlichen gleicher Stärke und im wesentlichen gleicher Frequenz bzw. gleicher Frequenzverteilung eingeprägt werden. Es versteht sich dabei von selbst, dass die Signalform der eingeprägten Vibration nicht zwingend sinusförmig sein muss. Die Signalform der Vibration kann insbesondere auch dreieck-oder rechteckförmig sein, oder im Einzelfall jede anderen zeitlichen Signalverlauf haben. Insbesondere kann die Signalform auch einen nicht zeitlich periodischen Verlauf haben und die Vibration kann insbesondere auch nach einem zufälligen Schema angeregt werden. Wesentlich ist, dass die Vibrationseinrichtung eine homogene Vibrationseinrichtung ist, so dass dem Pulverschlauch im Betriebszustand eine homogene, also gleichmässige mechanische Vibration über die Vibrationslänge eingeprägt wird.

Dadurch, dass die Vibrationseinrichtung der vorliegenden Erfindung eine homogene Vibrationseinrichtung ist, die dem Pulverschlauch die Vibration über die gesamte Vibrationslänge homogen, also gleichmässig einprägt und nicht wie bei der EP 0 131 805, die eine Vorrichtung lehrt, bei der die Vibration nur an einer Stelle, nämlich mittels eines am Pulververteiler vorgesehenen Vibrators dem Pulverschlauch eingeprägt wird, ist die durch die Erregerquelle stimulierte Vibrationsbewegung entlang des Pulverschlauchs über den gesamten Vibrationsabschnitt homogen, d.h. gleichmässig. Also anders als zum Beispiel bei der EP 0 131 805, wo die Ausbreitung der Vibrationsbewegung im Pulverschlauch begrenzt ist, d.h. an einer vorgegebenen Stelle im Pulverschlauch umso stärker gedämpft ist, je weiter man von dem am Pulverförderer angebrachten mechanischen Vibrator entfernt ist. Somit lässt sich bei der erfindungsgemässen Zuführeinrichtung zum Beispiel sowohl die Amplitude als auch die Frequenz der Vibrationen im Pulverschlauch definiert einstellen.

Somit spielt es bei der erfindungsgemässen Zuführeinrichtung auch keine Rolle an welcher Stelle im Pulverschlauch sich eine Verklumpung bildet oder sich zu bilden droht. Ganz gleich wo sich eine Verklumpung bildet oder sich zu bilden droht, diese wird durch die Verwendung der homogenen Vibrationseinrichtung im Vibrationsabschnitt immer gleich gut und zuverlässig aufgelöst. Somit spielt es bei der erfindungsgemässen Zuführeinrichtung insbesondere keine Rolle, wo der Pulverschlauch zum Beispiel durchhängt und seinen tiefsten Punkt. Eine mögliche Verklumpung des pulverförmigen Materials wird im Vibrationsabschnitt des Pulverschlauchs immer gleich gut aufgelöst. Dadurch ist immer ein gleichmässiger Pulverfluss über den gesamten Bearbeitungsvorgang gewährleistet und die oben bereits beschriebenen Probleme mit der Güte des Prozesses bzw. der mangelnden Qualität der damit hergestellten Produkte treten prinzipiell nicht mehr auf, so dass die erfindungsgemässe Vorrichtung insbesondere auch für hoch empfindliche Prozesse und hochwertige Produkte eine umfassende Lösung bietet.

Erfindungsgemäß ist die Vibrationseinrichtung mit einer eine Vibrationsenergie liefernden Erregerquelle verbunden, mit welcher die Vibrationseinrichtung zu der homogenen mechanischen Vibration über die vorgegebene Vibrationslänge anregbar ist. Die Erregerquelle stellt dabei bevorzugt eine Vibrationsenergie mit konstanter Vibrationsamplitude und / oder mit konstanter Vibrationsfrequenz bereit.

In einem für die Praxis besonders wichtigen erfindungsgemäßen Ausführungsbeispiel umfasst die Vibrationseinrichtung einen elektrisch leitenden Draht, der über die Vibrationslänge zum Beispiel, aber nicht zwingend, in Form einer Spule ausgebildet sein kann und die Erregerquelle ist eine elektrische Wechselspannungsquelle oder eine elektrische Wechselstromquelle, die die Vibrationsenergie am elektrisch leitenden Draht in Form einer elektrischen Wechselspannung oder eines elektrischen Wechselstroms bereitstellt.

Dabei kann die Vibrationseinrichtung auch ein permanentmagnetisches und / oder ein ferromagnetisches Material umfassen. Das magnetische Material kann dann zum Beispiel mit einem magnetischen Wechselfeld, das von einem Strom erzeugt wird, der durch den elektrisch leitenden Draht fliesst, magnetisch wechselwirken und so eine mechanische Schwingung des magnetischen Materials und / oder des elektrisch leitenden Drahtes induzieren, was wiederum im Vibrationsabschnitt die homogene mechanische Vibration über die vorgebbare Vibrationslänge im Pulverschlauch erzeugt.

Insbesondere dann, wenn die homogenen Vibrationen mit elektromagnetischen Mitteln erzeugt werden, kann der Pulverschlauch vorteilhaft eine elektromagnetische Abschirmung umfassen, damit eine elektromagnetische Wechselwirkung mit dem im Pulverschlauch transportierten pulverförmigen Material verhinderbar ist. Das kann insbesondere dann von Bedeutung sein, wenn das pulverförmige Material ein Spritzpulver zum thermischen Spritzen ist, da thermische Spritzpulver häufig auch elektrisch leitende bzw. magnetische Materialien enthalten.

In der Praxis wird die Vibrationseinrichtung bei einer erfindungsgemässen Zuführeinrichtung besonders vorteilhaft häufig über die gesamte Länge des Pulverschlauchs ausgebildet sein.

Der Pulverschlauch selbst kann dabei ein konfektionierbarer Pulverschlauch sein, der in einer beliebigen Länge bereitgestellt wird und für die Verwendung in einer Pulver verarbeitenden Einrichtung, wie zum Beispiel zur Verwendung in einer thermischen Spritzeinrichtung, auf die notwendige Länge zugeschnitten und eventuell mit den notwendigen Anschlüssen versehen wird, so dass die Vibrationseinrichtung des Pulverschlauchs mit der äusseren Erregerquelle zur Einspeisung der Vibrationsenergie verbunden werden kann.

Im Folgenden wird die Erfindung an Hand der Zeichnung näher erläutert. Es zeigt in schematischer Darstellung:
- Fig. 1: eine aus dem Stand der Technik bekannte Zuführeinrichtung;
- Fig. 2: ein erstes einfaches Ausführungsbeispiel einer erfindungsgemässen Zuführeinrichtung für eine thermische Spritzvorrichtung;
- Fig. 3: ein zweites Ausführungsbeispiel mit Treibereinheit und Regelungselektronik;
- Fig. 4a: ein Pulverschlauch einer erfindungsgemässen Zuführeinrichtung mit magnetischen Elementen und Wechselstrom führenden Drähten;
- Fig. 4b: einen Schnitt gemäss Fig. 4a entlang der Schnittlinie I-I;
- Fig. 4c: magnetische Wechselwirkung zwischen den magnetischen Elementen und den Wechselstrom führenden Drähten gemäss Fig. 4a bzw. Fig. 4b.

Fig. 1 zeigt eine aus dem Stand der Technik bekannte Zuführeinrichtung, die weiter oben bereits ausführlich beschrieben wurde und daher hier nicht mehrt diskutiert werden muss.

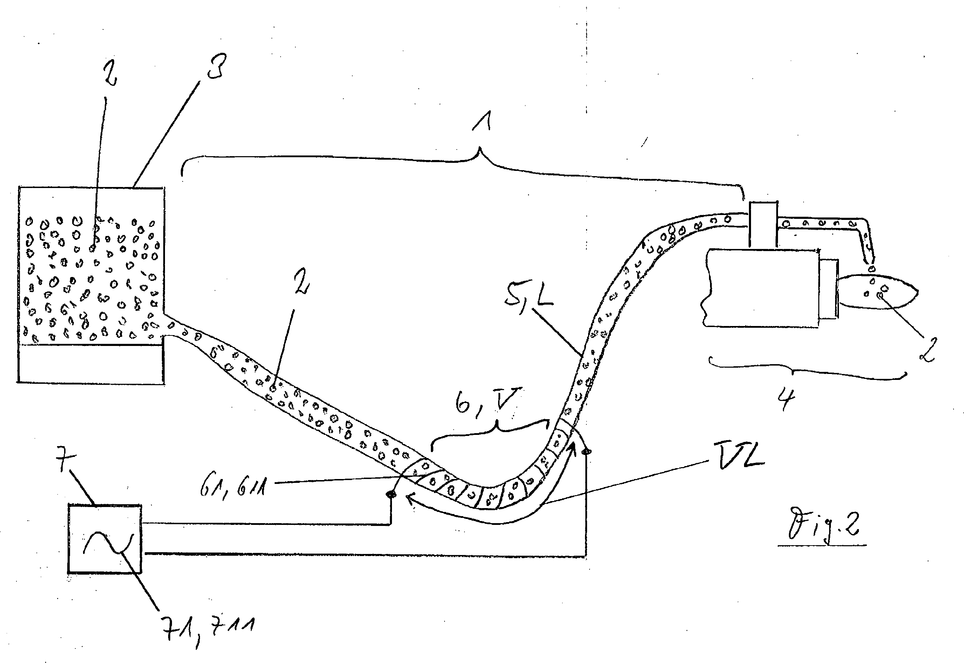

In Fig. 2 ist ein erstes einfaches Ausführungsbeispiel einer erfindungsgemässen Zuführeinrichtung für eine thermische Spritzvorrichtung schematisch dargestellt.

Die erfindungsgemässe Zuführeinrichtung 1 zur Zuführung eines pulverförmigen Materials 2 von einem Vorratsbehälter 3 zu einer Pulver verarbeitenden Einrichtung 4, die hier eine thermische Spritzpistole 4 ist, umfasst einen flexiblen Pulverschlauch 5 von vorgegebener Länge L. Am Pulverschlauch 5 ist eine Vibrationseinrichtung 6 in einem Vibrationsabschnitt V ausgebildet. Die Vibrationseinrichtung 6, die in Fig. 2 in Form einer um den Pulverschlauch 5 gewickelten Spule ausgebildet ist, kann zum Beispiel eine elektrische Spule sein oder auch eine zu einer Spule gewickelten Leitung für ein Fluid, wie weiter unten noch näher erläutert werden wird. Gemäss der Erfindung ist die Vibrationseinrichtung 6, 61, 611 eine homogene Vibrationseinrichtung 6, 61, 611, so dass dem Pulverschlauch 5 im Betriebszustand eine homogene mechanische Vibration über eine vorgebbare Vibrationslänge VL einprägbar ist.

Die Vibrationseinrichtung 6, 61, 611 ist mit einer eine Vibrationsenergie 71 liefernden Erregerquelle 7 verbunden, mit welcher die Vibrationseinrichtung 6, 61, 611 zu der homogenen mechanischen Vibration über die vorgegebene Vibrationslänge VL angeregt wird.

Wie symbolisch durch den Sinuswellenzug 71 in der Erregerquelle 7 angedeutet, liefert die spezielle Erregerquelle 7 eine Vibrationsenergie 71 mit konstanter Vibrationsamplitude und mit konstanter Vibrationsfrequenz.

Im Beispiel der Fig. 2 ist die Vibrationseinrichtung 6 ein zu einer Spule 611 gewickelter elektrisch leitender Draht 61 und die Erregerquelle 7 ist eine elektrische Wechselspannungsquelle oder eine elektrische Wechselstromquelle, die die Vibrationsenergie 71 am elektrisch leitenden Draht 61 in Form einer elektrischen Wechselspannung oder eines elektrischen Wechselstroms bereitstellt. Durch die elektrische Wechselenergie, die durch den Draht 61 fliesst, wird der zur Spule 611 gewickelte Draht über elektromagnetische Kräfte zu homogenen mechanischen Schwingungen angeregt, die sich auf den Pulverschlauch 5 im Vibrationsabschnitt V übertragen und so verhindern, dass sich im Schlauch Verklumpungen, Ablagerungen oder gar Verstopfungen durch das durch den Pulverschlauch 5 strömende Spritzpulver 2 ausbilden.

In einem anderen Ausführungsbeispiel kann die spulenförmig ausgestaltete Vibrationseinrichtung 6 der Fig. 2 auch zum Beispiel eine zu einer Spule gewickelte Leitung sein, in der ein Fluid in Form einer Flüssigkeit oder in Form eines Gases vorgesehen wird. An den beiden Enden der Spule ist dann jeweils ein mechanisches Einkoppelelement vorgesehen und die Erregerquelle 7 ist eine mechanische Energiequelle, die die Vibrationsenergie 71 am mechanischen Einkoppelelement in Form einer mechanischen Wechselanregung bereitstellt, so dass dem Pulverschlauch 5 im Betriebszustand eine homogene mechanische Vibration über die vorgebbare Vibrationslänge VL eingeprägt wird. Je nach dem ob das Fluid eine Flüssigkeit oder ein Gas ist, ist die mechanische Erregerquelle 7 eine hydraulische oder eine pneumatische Erregerquelle 7.

Es versteht sich dabei von selbst, dass im Gegensatz zur Fig. 2 die Fluidleitung oder die elektrische Spule besonders vorteilhaft auch innerhalb einer Ummantelung des Pulverschlauchs 5 ausgebildet sein kann, wobei in der Praxis die Vibrationseinrichtung 6 besonders bevorzugt über die gesamte Länge L des Pulverschlauchs 5 ausgebildet ist.

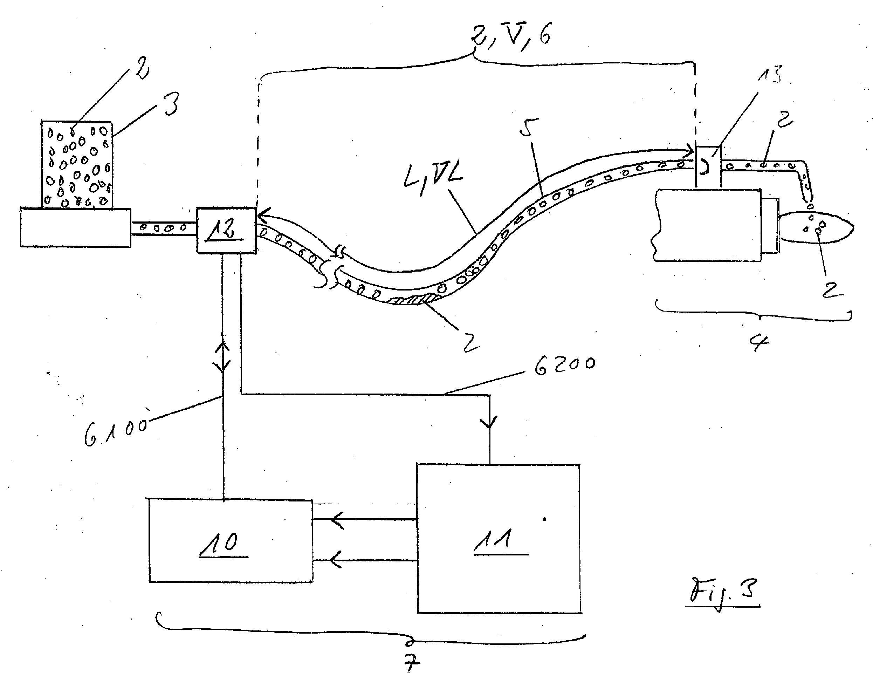

In Fig. 3 ist im Zusammenhang mit einer thermischen Spritzvorrichtung 4 zum Spritzen eines Spritzpulvers 2 schematisch ein zweites Ausführungsbeispiel einer erfindungsgemässen Zuführeinrichtung 1 mit Treibereinheit 10 und Regelungselektronik 11 dargestellt, das für die Praxis besondere Bedeutung hat. Bei der Zuführeinrichtung 1 der Fig. 3 ist eine elektrische Vibrationseinrichtung 6 in einer Wand des Pulverschlauchs 5 vorgesehen. Die Treibereinheit 10 bildet zusammen mit der Regelungselektronik 11 die Erregerquelle 7.

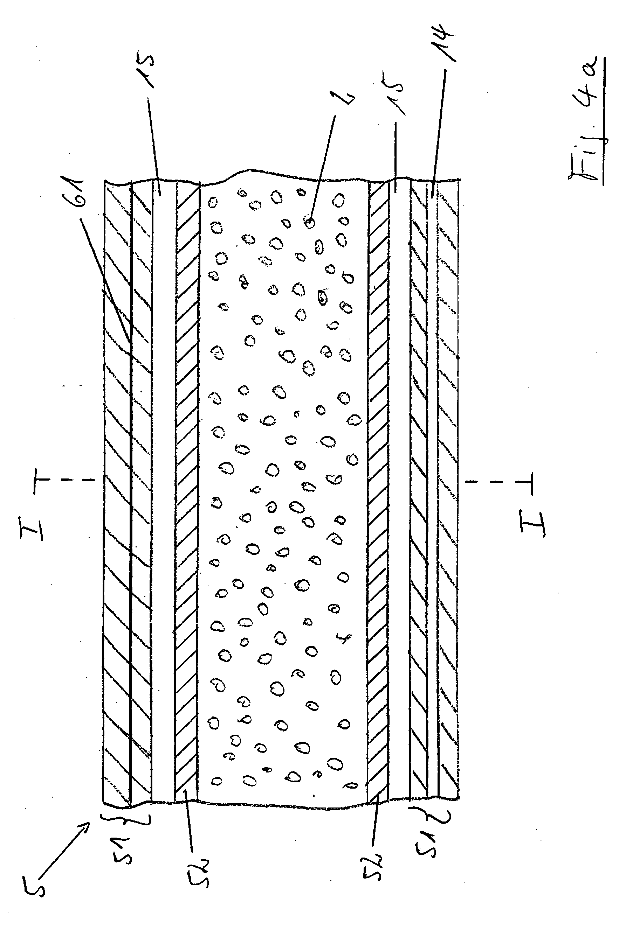

Eine mögliche Ausführung eines Pulverschlauchs 5 gemäss Fig. 3 wird anschliessend exemplarisch anhand der Fig. 4a bis Fig. 4c diskutiert werden.

Die in Fig. 3 aus Gründen der Übersichtlichkeit nicht näher dargestellte Vibrationseinrichtung 6 erstreckt sich über die gesamte Länge L des Pulverschlauchs 5. Das heisst, die Vibrationslänge VL hat die Länge L des Pulverschlauchs 5.

Dem Pulverschlauch 5 wird aus dem Vorratsbehälter 3 das Spritzpulver 2 über eine Anschlussbox 12 zugeführt. Das Spritzpulver 2 strömt dann, häufig unter zu Hilfenahme eines unter einem vorgegebenen Druck stehenden Trägergases durch den Pulverschlauch 5 und über die Abschlussbox 13 in die Spritzpistole 4 und wird dort in einem thermischen Spritzprozess zur Beschichtung eines nicht dargestellten Substrats verspritzt.

Die sich in der Wand des Pulverschlauchs 5 befindliche elektrische Vibrationseinrichtung 6 umfasst mindestens zwei elektrisch leitende Drähte 61, die über die Leitung 6100 mit der Treibereinheit 10 mit elektrischer Energie, im vorliegenden Beispiel mit einem elektrischen Wechselstrom versorgt werden. Der elektrische Strom fliesst dabei aus der Treibereinheit 10 über die Leitung 6100 und die Anschlussbox 12 in eine der beiden elektrisch leitenden Drähte 61, wird in der Abschlussbox 13 in den zweiten sich im Pulverschlauch 5 befindenden elektrischen Draht 61 weitergeleitet und fliesst dann über die Anschlussbox 12 und die elektrische Leitung 6100 wieder zur Treibereinheit 10 zurück. Es versteht sich, dass die für die Hin- und Rückleitung des elektrischen Stroms zur Anschlussbox 12 benutze elektrische Leitung 6100 selbstverständlich zwei getrennte elektrische Kabel umfasst.

Die Treibereinheit 10 wird von der Regelungselektronik 11 angesteuert, die bevorzugt eine elektronische Datenverarbeitungsanlage umfasst. Die Regelungselektronik gibt der Treibereinheit 10 in an sich bekannter Weise die Signalform, insbesondere eine Amplitude und / oder ein Frequenz vor. Das von der Regelungselektronik 11 vorgegebene Signal wird von der Treibereinheit 10 verstärkt und zur Ausbildung der homogenen Vibration im Pulverschlauch 5 über die Anschlussbox 12 in die elektrischen Leitungen 61 der Vibrationseinrichtung 6 wie oben beschrieben eingespeist.

Dabei sind in der Anschlussbox 12 und / oder in der Abschlussbox 13 und / oder im Pulverschlauch 5 nicht näher dargestellte geeignete Sensoren vorgesehen, mit denen sich der Pulverstrom im Pulverschlauch 5 überwachen lässt. Die Sensoren sind über die Steuerleitung 6200 mit der Regelungselektronik verbunden, so dass die Vibrationen im Pulverschlauch 5 in Abhängigkeit von den Strömungsverhältnissen entsprechend angepasst werden können.

Sensoren, die den Pulverstrom im Pulverschlauch überwachen können z.B. Temperatursensoren, Durchflussmesser, Drucksensoren oder andere geeignete Sensoren sein, die zur Charakterisierung des Pulverstroms im Pulverschlauch 5 geeignet sind.

Es versteht sich, dass in einem einfacheren Ausführungsbeispiel auch keine Regelung mit Sensoren vorgesehen sein kann und an der Treibereinheit 10 zum Beispiel eine Signalform fest vorgegeben wird.

Die Fig. 4a bis Fig. 4c zeigen schliesslich ein besonders bevorzugtes Ausführungsbeispiel eines Pulverschlauchs 5 der vorliegenden Erfindung, wie er zum Beispiel im Ausführungsbeispiel der Fig. 3 besonders vorteilhaft verwendet werden kann.

Der Pulverschlauch der Fig. 4a ist ein Pulverschlauch einer erfindungsgemässen Zuführeinrichtung mit magnetischen Elementen 14 und Wechselstrom führenden Drähten 61, die in einer äusseren Wand 51 des Pulverschlauchs 5 vorgesehen sind. Zwischen der äusseren Wand 51 und der inneren Wand 52 des Pulverschlauchs 5 ist ein elektromagnetisches Abschirmelement 15 angeordnet, das weitgehend verhindert, dass elektromagnetische Energie in das Innere des Pulverschlauchs 5 eingekoppelt wird.

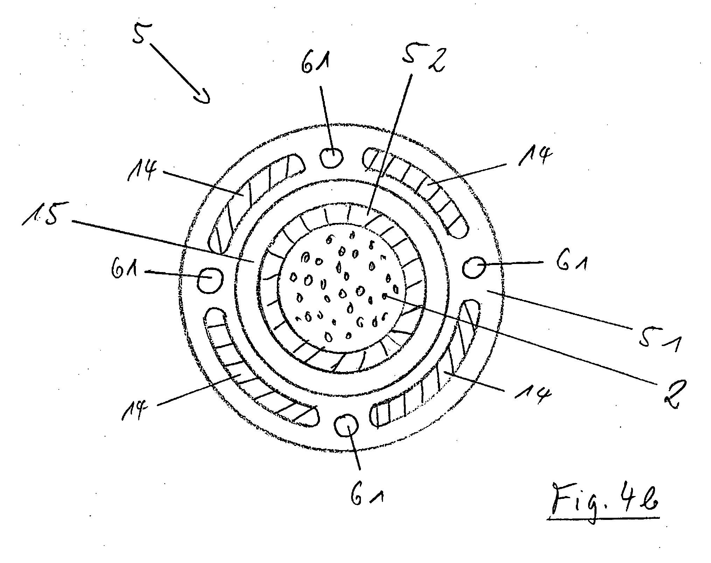

Zum besseren Verständnis ist anhand der Fig. 4b ein Schnitt gemäss Fig. 4a entlang der Schnittlinie I-I schematisch dargestellt. Gut zu erkennen sind die in der äusseren Wand 51 angeordneten segmentartigen magnetischen Elemente 14, die sich über die gesamte Vibrationslänge VL erstrecken und im Betriebszustand mit den von einem Wechselstrom durchflossenen Drähten 61 magnetisch Wechselwirken. Zwischen der äusseren Wand 51 und der inneren Wand 52 ist das elektromagnetische Abschirmelement 15 vorgesehen, das zum Beispiel eine elektrisch leitende Folie sein kann, die eventuell noch elektrisch geerdet ist.

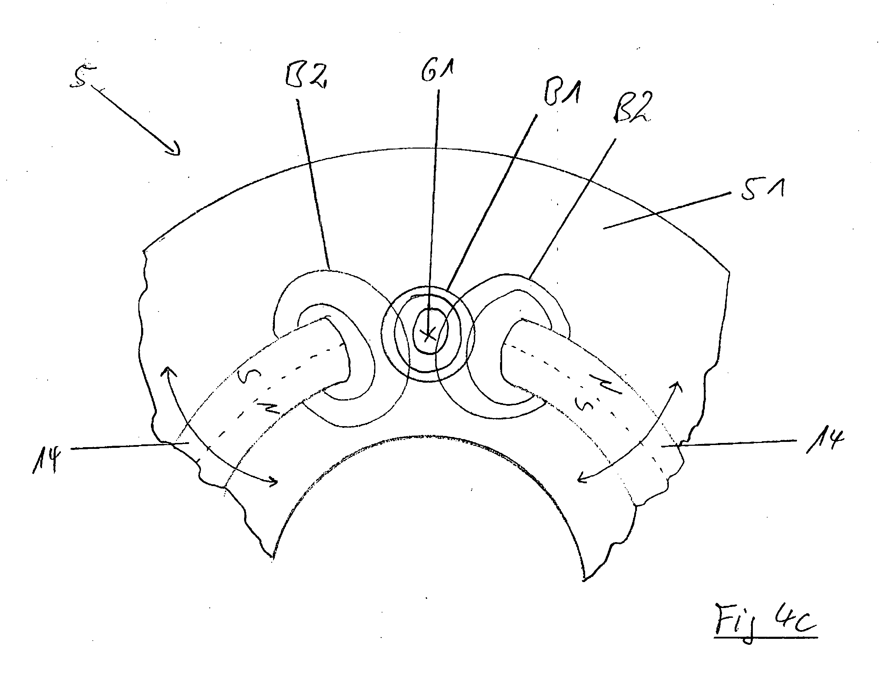

Die Funktionsweise der magnetischen Wechselwirkung zwischen den magnetischen Elementen 14 und den bevorzugt von einem Wechselstrom durchflossenen Drähten wird anhand der Fig. 4c verdeutlicht, die ausschnittsweise zwei benachbarte magnetische Elemente 14 mit dazwischen verlaufenden Draht 61 zeigt. Der elektrische Wechselstrom, der durch den Draht 61 fliesst, erzeugt um den Strom durchflossenen Draht 61 herum ein räumlich und zeitlich wechselndes magnetisches Feld B1, das mit dem magnetischen Feld B2 der magnetischen Elemente 14 wechselwirkt. Dabei entsteht abwechselnd eine anziehende und eine abstossende Kraft zwischen dem Draht 61 und den magnetischen Elementen 14, so dass der Draht 61 und die magnetischen Elemente 14 relativ zueinander mechanisch schwingen, wodurch dem Pulversschlauch über die gesamte Vibrationslänge VL, die bevorzugt gleich der gesamten Länge des Pulverschlauchs 5 ist, die homogene mechanische Vibration eingeprägt wird, so dass ein Verklumpen der Spritzpulvers 2 im Pulverschlauch 5 verhindert wird, bzw. bestehende Verklumpungen, die sich zum Beispiel während eines Stillstands der Anlage im Pulverschlauch 5 gebildet haben, zuverlässig wieder aufgelöst werden. Dabei sind für die Umsetzung von elektrischer Energie in mechanische Schwingungen prinzipiell natürlich auch rein elektrische Spulensysteme mit einer relativ komplexen Spulengeometrie und Ansteuerung möglich (es ist in der Regel noch eine zusätzliche Gleichstromquelle für die magnetische Felderzeugung nötig), so dass auf die Verwendung von Permanentmagneten auch verzichtet werden kann. In vielen für die Praxis wichtigen Fällen ist bei der praktischen Grösse und Beschaffenheit des Förderschlauches aber der Einsatz von dauermagnetischen Stoffen fast zwingend notwendig, zumindest besonders vorteilhaft.

Es versteht sich dabei von selbst, dass alle in dieser Anmeldung exemplarisch beschrieben Ausführungsbeispiele erfindungsgemässer Zuführeinrichtungen oder Zuführungsverfahren auch geeignet kombinierbar sind. Der Fachmann erkennt darüber hinaus auch weitere einfache Fortbildungen der beschriebenen Ausführungsbeispiele. Insbesondere kann zur Erzeugung der homogenen Vibrationen im Vibrationsabschnitt jedwede geeignete Anregungsmethode zur Anwendung kommen, wie zum Beispiel akustische Anregungen, beispielweise Ultraschall, elektromagnetische Anregungen, elektromechanische, beispielweise über piezoelektrische Elemente usw..

## Patentansprüche

1. Zuführeinrichtung zur Zuführung eines pulverförmigen Materials (2) von einem Vorratsbehälter (3) zu einer Pulver verarbeitenden Einrichtung (4), wobei die Zuführeinrichtung einen flexiblen Pulverschlauch (5) von vorgebbarer Länge (L) umfasst, und am Pulverschlauch (5) eine Vibrationseinrichtung (6) in einem Vibrationsabschnitt (V) ausgebildet ist, und die Vibrationseinrichtung (6, 61, 611) eine homogene Vibrationseinrichtung (6, 61, 611) ist, so dass dem Pulverschlauch (5) im Betriebszustand eine homogene mechanische Vibration über eine vorgebbare Vibrationslänge (VL) einprägbar ist, **dadurch gekennzeichnet, dass** die Vibrationseinrichtung (6) einen elektrisch leitenden Draht (61) umfasst, wobei die Vibrationseinrichtung (6, 61, 611) mit einer eine Vibrationsenergie (71) liefernden Erregerquelle (7) verbunden ist, mit welcher die Vibrationseinrichtung (6, 61, 611) zu der homogenen mechanischen Vibration über die vorgegebene Vibrationslänge (VL) anregbar ist, und die Erregerquelle (7) eine elektrische Wechselspannungsquelle oder eine elektrische Wechselstromquelle ist, die die Vibrationsenergie (71) am elektrisch leitenden Draht (61) in Form einer elektrischen Wechselspannung oder eines elektrischen Wechselstroms bereitstellt.

2. Zuführeinrichtung nach Anspruch 1, wobei die Erregerquelle (7) eine Vibrationsenergie (71) mit konstanter Vibrationsamplitude bereitstellt.

3. Zuführeinrichtung nach Anspruch 1 oder 2, wobei die Erregerquelle (7) eine Vibrationsenergie (71) mit konstanter Vibrationsfrequenz bereitstellt.

4. Zuführeinrichtung nach einem der vorangehenden Ansprüche, wobei die Vibrationseinrichtung (6) ein permanentmagnetisches und / oder ein ferromagnetisches Material (14) umfasst.

5. Zuführeinrichtung nach einem der vorangehenden Ansprüche einem der, wobei der elektrisch leitende Draht (61) über die Vibrationslänge (VL) in Form einer Spule (611) ausgebildet ist.

6. Zuführeinrichtung nach einem der vorangehenden Ansprüche, wobei der Pulverschlauch (5) eine elektromagnetische Abschirmung (15) umfasst.

7. Zuführeinrichtung nach einem der vorangehenden Ansprüche, wobei die Vibrationseinrichtung (6) über die gesamte Länge (L) des Pulverschlauchs (5) ausgebildet ist und / oder wobei der Pulverschlauch (5) ein konfektionierbarer Pulverschlauch (5).

8. Zuführeinrichtung nach einem der vorangehenden Ansprüche, wobei das pulverförmige Material (2) ein Spritzpulver zum thermischen Spritzen ist und die Pulver verarbeitende Einrichtung (4) eine thermische Spritzeinrichtung ist.

## Claims

1. A supply apparatus for the supply of a powder material (2) from a storage container (3) to a powder processing apparatus (4), wherein the supply apparatus includes a flexible powder hose (5) of predeterminable length (L) and a vibration apparatus (6) is formed in a vibration section (V) at the powder hose (5), and wherein the vibration apparatus (6, 61, 611) is a homogenous vibration apparatus (6, 61, 611) so that, in the operating state, a homogenous mechanical vibration can be impressed onto the powder hose (5) for a predeterminable vibration length (VL), **characterized in that** the vibration apparatus (6) includes an electrically conducting wire (61), wherein the vibration apparatus (6, 61, 611) is connected to an exciter source (7) supplying a vibration energy (71) by means of which the vibration apparatus (6, 61, 611) can be excited for the homogeneous mechanical vibration over the predetermined vibration length (VL), and the exciter source (7) is an electric alternating voltage source or an electric alternating current source which provides the vibration energy (71) at the electrically conducting wire (61) in the form of an electric alternating voltage or an electric alternating current.

2. A supply apparatus in accordance with claim 1, wherein the exciter source (7) provides a vibration energy (71) having a constant vibration amplitude.

3. A supply apparatus in accordance with claim 1 or claim 2, wherein the exciter source (7) provides a vibration energy (71) having a constant vibration frequency.

4. A supply apparatus in accordance with any one of the preceding claims, wherein the vibration apparatus (6) includes a permanent magnetic material and/or a ferromagnetic material (14).

5. A supply apparatus in accordance with any one of the preceding claims, wherein the electrically conducting wire (61) is configured in the shape of a coil (611) over the vibration length (VL).

6. A supply apparatus in accordance with any one of the preceding claims, wherein the powder hose (5) includes an electromagnetic shield (15).

7. A supply apparatus in accordance with any one of the preceding claims, wherein the vibration apparatus (6) is formed over the total length (L) of the powder hose (5) and/or wherein the powder hose (5) is a customizable powder hose (5).

8. A supply apparatus in accordance with any one of the preceding claims, wherein the powder material (2) is a spray powder for thermal spraying and the powder processing apparatus (4) is a thermal spray apparatus.

## Revendications

1. Installation d'amenée pour l'amenée d'un matériau pulvérulent (2) d'un contenant de stockage (3) à une installation de traitement de poudres (4), où l'installation d'amenée comprend un tuyau de poudre flexible (5) d'une longueur prédéfinissable, et où est réalisée au tuyau de poudre (5) une installation de vibration (6) dans une section de vibration (V), et l'installation de vibration (6, 61, 611) est une installation de vibration homogène (6, 61, 611), de sorte qu'une vibration mécanique homogène peut être appliquée au tuyau de poudre (5) à l'état de fonctionnement sur une longueur de vibration prédéfinissable (VL), **caractérisée en ce que** l'installation de vibration (6) comprend un fil électriquement conducteur (61), où l'installation de vibration (6, 61, 611) est reliée à une source d'énergie (7) fournissant une énergie de vibration (71), par laquelle l'installation de vibration (6, 61, 611) peut être excitée en vibration mécanique homogène sur la longueur de vibration prédéfinie (VL), et la source d'énergie (7) est une source de tension alternative électrique ou une source de courant alternatif électrique, qui met à disposition l'énergie de vibration (71) au fil électriquement conducteur (61) sous la forme d'une tension alternative électrique ou d'un courant alternatif électrique.

2. Installation d'amenée selon la revendication 1, dans laquelle la source d'excitation (7) met à disposition une énergie de vibration (71) d'une amplitude de vibration constante.

3. Installation d'amenée selon la revendication 1 ou 2, dans laquelle la source d'excitation (7) met à disposition une énergie de vibration (71) d'une fréquence de vibration constante.

4. Installation d'amenée selon l'une des revendications précédentes, dans laquelle l'installation de vibration (6) comprend un matériau d'aimant permanent et/ou ferromagnétique (14).

5. Installation d'amenée selon l'une des revendications précédentes, dans laquelle le fil électriquement conducteur (61) est réalisé sur la longueur de vibration (VL) sous la forme d'une bobine (611).

6. Installation d'amenée selon l'une des revendications précédentes, dans laquelle le tuyau de poudre (5) comprend un blindage électromagnétique (15).

7. Installation d'amenée selon l'une des revendications précédentes, dans laquelle l'installation de vibration (6) est réalisée sur toute la longueur (L) du tuyau de poudre (5) et/ou où le tuyau de poudre (5) est un tuyau de poudre (5) pouvant être confectionné.

8. Installation d'amenée selon l'une des revendications précédentes, dans laquelle le matériau en poudre (2) est une poudre susceptible d'être projetée pour la projection thermique, et l'installation de traitement de poudre (4) est une installation de projection thermique.
